# EUROPEAN PATENT APPLICATION

(11) **EP 2 960 893 A2**
(43) Date of publication of application: **30.12.2015**
(21) Application number: 15173560.2
(22) Date of filing: 24.06.2015
(51) Int. Cl.: G09G 3/20

(54) **ELECTRONIC INFORMATION LABEL**

(30) Priority: 25.06.2014 KR 20140078534; 10.04.2015 KR 20150050981
(71) Applicant: Samsung Electro-Mechanics Co., Ltd., Gyeonggi-do (KR)
(72) Inventor: KIM, Dae Seob, 202-204 Gyeonggi-do (KR); RYU, Jong Gi, 101-701 Seoul (KR); LEE, Tae Ha, 403-708 Gyeonggi-do (KR)
(74) Representative: Grünecker Patent- und Rechtsanwälte PartG mbB

(57) **Abstract**

An electronic label and a method of displaying product information on an electronic label are provided. An electronic label includes an electronic paper display having a first display area and a second display area, a first display driver configured to drive a first thin film transistor (TFT) substrate corresponding to the first display area, and a second display driver configured to drive a second TFT substrate corresponding to the second display area, and the first display driver is configured to drive the first TFT substrate independently from the second display driver.

## Description

### CROSS-REFERENCE TO RELATED APPLICATIONS

This application claims the benefit under 35 USC 119(a) of Korean Patent Application Nos. 10-2014-0078534, filed on June 25, 2014, and 10-2015-0050981, filed on April 10, 2015, in the Korean Intellectual Property Office, the entire disclosures of which are incorporated herein by references for all purposes.

### BACKGROUND

### 1. Field

The following description relates to electronic information labels that electronically display product information, and to techniques of electronically displaying product information in stores.

### 2. Description of Related Art

Paper labels attached to store shelves are inconvenient in that the labels are required to be changed every time product prices are changed. As a substitute for paper labels, electronic information labels (EIL, hereinafter referred to as electronic labels) that electronically display product information may be used. Electronic labels communicate with a management server through a gateway. The electronic labels that are managed via an identical gateway may be considered together as forming a group, and all of the electronic labels managed by one server may be separated into a plurality of groups based on which gateway is being used for each electronic label. Electronic labels are often battery-powered. In order to reduce power consumption of the electronic labels, electronic labels go into a sleep mode except for the period when they are awake, referred to as 'the wake-up period', during which information is updated. Further, electronic paper displays (EPDs) are used so that the electronic labels may display information even without a power supply. During the wake-up period, electronic labels listen to communications from a management server, and receive data from the management server, and store the received data. The data includes product information.

In order to inform customers of discounted products or special sales, promotional information is displayed on electronic labels. For example, electronic labels may blink to display products sold at a special discount price during a specific period of time, such as one hour before the store closes. Further, the electronic labels may display promotion information by blinking graphics or words at a specific area, such as a part or an edge of a display area, while other parts display product information. Further, there may be a need to reduce power consumption by periodically changing a display state, as well as a need to control blinking of electronic labels to allow various promotions.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electronic label for displaying product information received from a server includes an electronic paper display comprising a TFT substrate having a first TFT area that corresponds to a first display area and a second TFT area that corresponds to a second display area, a first driver configured to scan rows and columns of the first TFT area, a second driver configured to drive the second TFT area, and a controller configured to interface with the first driver to display the product information on the first display area, and to interface with the second driver to display promotion information on the second display area.

The second driver may be configured to scan rows and columns of the second TFT area.

The second driver may be configured to receive information to be displayed from the controller, and may include a blinking driver configured to control blinking of the information to be displayed by alternately displaying and not displaying the information.

The blinking driver may be activated the controller, and may be configured to continue to operate independently of the controller to enable blinking when the controller is in a sleep mode.

The second driver may further include a timer configured to generate an event at a regular interval, and the blinking driver may be configured to wake up according to the event generated by the timer.

The second TFT area may include a fixed display area having drive lines that are bound together to be driven at the same time.

The second driver may include a pulse generator configured to output a switching pulse to bound drive lines in a fixed display area to display information by blinking.

The pulse generator may be activated by the control of the controller, and may be configured to continue to operate independently of the controller to enable blinking when the controller is in a sleep mode.

The second driver may further include a timer configured to generate an event at a regular interval, and the blinking driver may be configured to wake up according to the event generated by the timer.

The first driver and the second driver may be CMOS circuits that are integrated at one edge of the TFT substrate.

In another general aspect, an electronic label includes an electronic paper display including a first display area and a second display area, a first display driver configured to drive a first TFT substrate corresponding to the first display area, and a second display driver configured to drive a second TFT substrate corresponding to the second display area, and the first display driver is configured to drive the first TFT substrate independently from the second display driver that drives the second TFT substrate.

The general aspect of the electronic label may further include a controller configured to receive information to be displayed on the electronic paper display from a server, provide first information to be displayed in the first display area to the first display driver, and provide second information to be displayed in the second display area to the second display driver.

The first display driver or the second display driver may be capable of driving the first TFT substrate or the second TFT substrate when the device controller is in a sleep mode.

In yet another general aspect, a method of displaying product information on an electronic label having a first display area and a second display area involves receiving display data to be displayed on the electronic label from a server, providing a first information to be displayed on the first display area to a first display driver of the electronic label and providing a second information to be displayed on the second display area to a second display driver, and displaying an image on the second display area independently of an image displayed in the first display area.

The providing of the first information and the second information may be performed by a controller of the electronic label, and the displaying of the image on the second display area may be performed by the second display driver independently of the controller.

In another general aspect, there is provided a non-transitory computer readable medium storing instructions that causes a computer to perform the methods described above.

Other features and aspects will be apparent from the following detailed description, the drawings, and the claims.

### BRIEF DESCRIPTION OF THE DRAWINGS

FIG. 1 is a schematic diagram illustrating an example of an electronic label management system.
FIG. 2 is a block diagram illustrating an example of an electronic label.
FIG. 3 is a diagram illustrating an example of a TFT substrate of an electronic paper display.
FIG. 4 is a diagram illustrating another example of a TFT substrate of an electronic paper display.
FIG. 5 is diagram illustrating an example of a second driver.
FIG. 6 is a block diagram illustrating another example of a second driver.
FIG. 7 is a flow chart illustrating an example of a method of displaying information on an electronic label.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

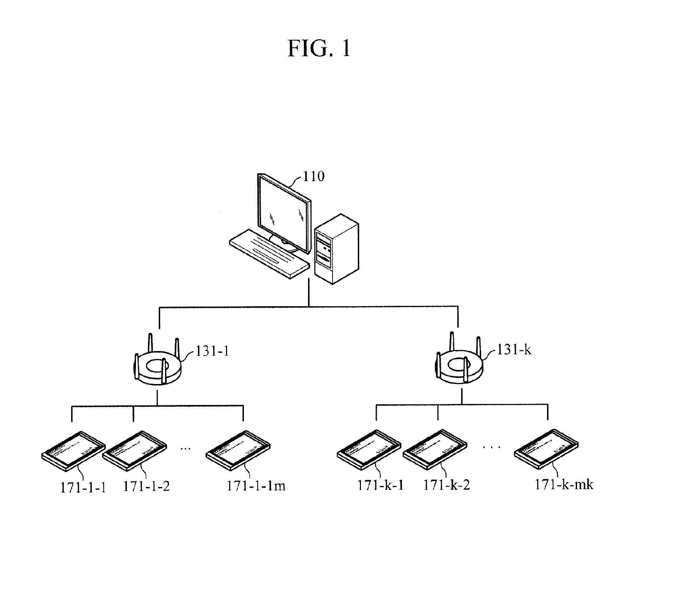

FIG. 1 is a schematic diagram illustrating an example of an entire electronic label management system. Referring to the example illustrated in FIG. 1, the management server 110 communicates with all electronic labels 171-1-1 through 171-1-1m, and 171-k-1 through 171-k-mk via gateways 131-1 through 131-k that manage the electronic labels by separating the electronic labels into a plurality of groups. The management server 110 is connected with the gateways 131-1 through 131-k through a wired network. While two gateways are illustrated for simplicity, the gateways 131-1 through 131-k may include three or more gateways. The gateways 131-1 through 131-k communicate with the electronic labels that belong to each gateway according to protocols defined on a PHY/MAC layer in accordance with near field wireless communication, for example, IEEE 802.15.4 standards.

The electronic labels are separated into a plurality of groups, and product information is updated for each group. The electronic labels 171-1-1 through 171-1-1m, and 171-k-1 through 171-k-mk that are managed by the identical gateway 131-1 may form a group. The electronic labels remain in a sleep mode to save battery power, except for the wake-up periods that are required to update product information. Further, electronic paper displays (EPDs) are used so that the electronic labels may display information even without a power supply. During a wake-up period, electronic labels listen to communications from a management server, receive data from the management server, and store the received data. The data includes product information.

In the illustrated example, the management server 110 may control promotion functions of the electronic labels 171-1-1 through 171-1-1m, and 171-k-1 through 171-k-mk. For example, upon starting to sell a product at a discount price, the management server 110 updates the product price to a discount price so that an electronic label may display the discount price. In addition, the management server 110 may activate a promotion function of electronic labels. For example, the management server 110 may control the promotion function of an electronic label so that "on sale" may blink at one side. The promotion function may be controlled to be activated for a specific period of time. In one embodiment, the promotion information is fixed information at all times. In another embodiment, the promotion information may be variable information that is transmitted from the management server 110.

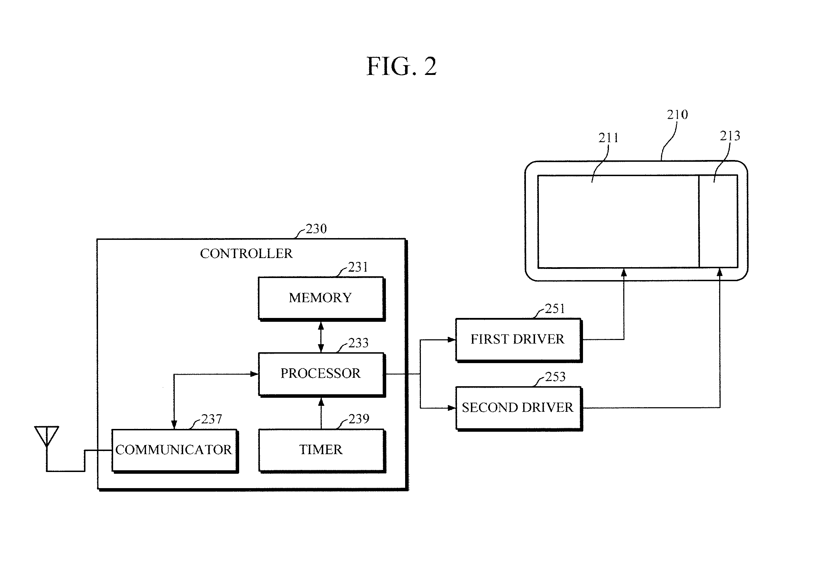

FIG. 2 illustrates an entire structure of an example of an electronic label. In the illustrated example, the electronic label includes an electronic paper display 210, a first driver 251, a second driver 253, and a controller 230. The electronic paper display 210 includes a first display area 211 and a second display area 213. Examples of the electronic paper display may include a twist ball type electronic paper produced by Xerox Corporation that utilizes an electrostatically charged hemi-spherical twist ball, an electrophoresis panel produced by E Ink Corporation utilizing an electrophoresis method and a microcapsule, or a "no power" cholesteric liquid crystal electronic paper produced by Kent Displays that utilizes polymer stabilized cholesteric liquid crystal. According to this example, the electronic paper display may include: a TFT substrate having a thin film transistor (TFT) formed on a polysilicon layer that is deposited on a plastic substrate; a transparent electrode substrate; and a microcapsule layer sealed between the TFT substrate and the transparent electrode substrate. The electronic paper display may include a CMOS circuit formed by recrystallizing edges of the TFT substrate. The display may be a bistable display that retains an image without power.

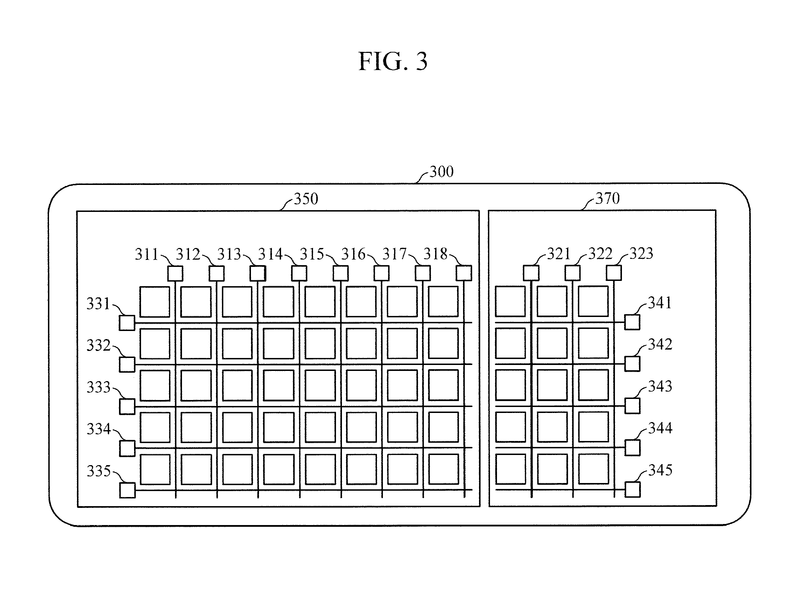

FIG. 3 illustrates an example of a TFT substrate 300 of an electronic paper display. In this example, a first display area 211 displays product information, such as a name, a place of origin, weight, and the like. A second display area 213 displays promotion information. For example, the second display area 213 may display "on sale" by blinking, or may blink in black and white at regular intervals to attract customers' attention. Referring to the example illustrated in FIG. 3, the TFT substrate 300 includes a first TFT area 350 that corresponds to the first display area 211 and a second TFT area 370 that corresponds to the second display area 213. That is, in this example, the first display area 211 is substantially the same in shape and size as the first TFT area 350 that provides an image for the first display area 211, and the second display area 213 is substantially the same in shape and size as the second TFT area 370 that provides an image for the second display area 213. The first TFT area 350 is operated by gate lines 331 to 335 and data lines 311 to 318. The second TFT area 350 is operated by gate lines 341 to 345 and data lines 321 to 323. While FIG. 3 illustrates an example in which the second display area 213 displays promotion information, the present disclosure is not limited thereto; in another example, the second display area may be used to display information that is not promotion related, or three or more display areas may be provided within an electronic paper display.

According to one example, the first driver 251 scans the rows and columns of the first TFT area 350. The second driver 253 drives the second TFT area 370. According to another example, the first driver 251 and the second driver 253 may be CMOS circuits that are integrated at one edge of the TFT substrate. The TFT circuit is formed on polysilicon that has low crystallinity, and the CMOS circuit may be manufactured through an additional process after increasing crystallinity by recrystallizing polysilicon.

The gate lines and the data lines of each TFT area are driven by separate driving circuits, thereby displaying information independently. That is, information displayed on the second display area 213 may be updated without updating information displayed on the first display area 211.

In the illustrated example, the controller 230 is a wireless System On Chip (SoC) for wireless communications of electronic labels. The SoC includes not only a communicator 237 that processes wireless communications, but also a processor 233, a memory 231, and a timer 239. The processor 233 operates as a main controller that controls the entire operation of the device. In response to receiving a signal from the processor 233, the first driver 251 displays images showing product information on the first display area 211. The timer 239 operates even when the processor 233 is in a sleep mode, and generates an interrupt signal at regular intervals predetermined by the processor 233. The wake-up time slot may be determined by an electronic label management server in a manner that does not cause a conflict between electronic labels.

Once an electronic label periodically wakes up under the control of the processor 233 to receive product information to be displayed from the communicator 237, the processor 233 controls the first driver 251 to display received product information on the first display area 211.

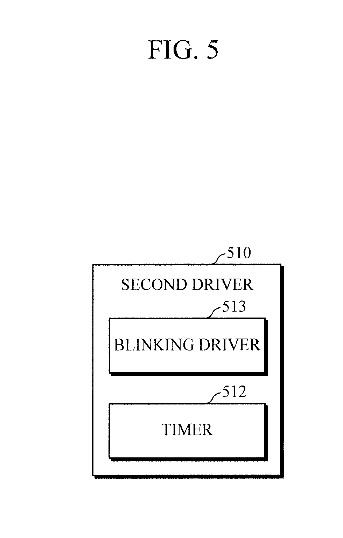

FIG. 5 illustrates an example of a second driver. In this example, the second driver 253 includes a blinking driver 513 and a timer 512. The second driver 253 may receive information to be displayed from the controller 230, and store the received information in a memory. The blinking driver 513 of the second driver 253 may control the blinking of the information to be displayed by alternately displaying and not displaying the information. In response to receiving promotion information to be displayed, the controller 230 outputs the received promotion information to the second driver 253, and the second driver 253 stores the promotion information in a memory. In another example, the second driver 253 is activated by the control of the controller 230, and may be operated independently of the controller 230 even when the controller 230 is in a sleep mode. The second driver 253 may enable blinking by repeatedly displaying the stored promotion information, e.g., images to be displayed, on the second display area 213, and by driving the display in white after a specific period of time.

According to one example, the second driver includes a timer. The timer generates events at regular intervals. Even when a processor of the controller 230 is in a sleep mode, the timer operates to generate an event at a predetermined interval. Even when the controller 230 is in a sleep mode, the blinking driver wakes up according to an event generated by the timer to enable blinking at a low power. The blinking period may be set by a manager and may be received by the processor 233 through the communicator 237 during a wake-up period to be transmitted to the second driver 253.

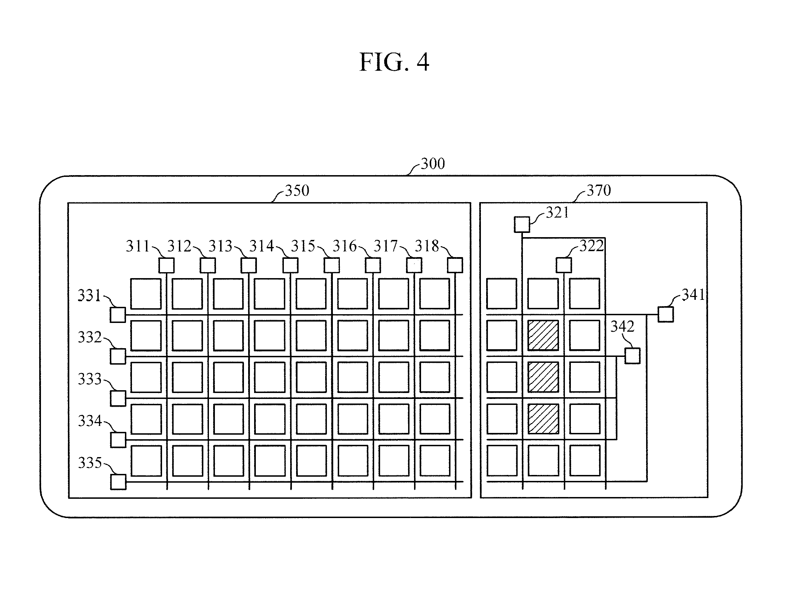

In another example, the second TFT area 370 may include a fixed display area having drive lines that are bound together to be driven at the same time. FIG. 4 is a diagram illustrating a TFT substrate 300 of an electronic paper display according to another exemplary embodiment. As illustrated in FIG. 4, in the second TFT area 370, gate lines 342, 343, and 344 are bound together; gate lines 341 and 345 are bound together; and data lines 321 and 323 are bound together. By driving the data line 322 and the gate line 342, a display area of the electronic paper display that is shown with an oblique line in the second TFT area 370 may be turned on. By driving the data line 321 and the gate line 341 in FIG. 4, except for the data line 322 and the gate line 342, a display area of the electronic paper display that is not shown with an oblique line in the second TFT area 370 may be turned off. In this manner, by appropriately binding the gate lines and the data lines together to drive the lines at the same time, fixed information, such as "SALE", may be displayed at all times.

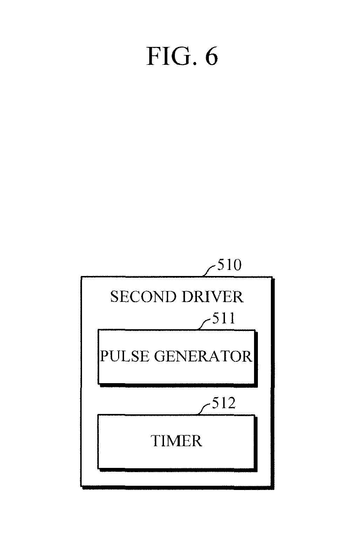

FIG. 6 illustrates another example of a second driver. In this example, the second driver 253 includes a pulse generator that outputs a switching pulse to bound drive lines in a fixed display area to display information by blinking. The blinking period may be set by a manager and may be received by the processor 233 through the communicator 237 during a wake-up period to be transmitted to the second driver 253. Colored blinking may be allowed by further providing, on the upper portion of the second display area, a sheet having a color area.

According to one example, a fixed display pattern, such as "SALE", may blink on a fixed display area of the electronic paper display. A blinking pulse is applied only to a display pattern portion, and a background portion is refreshed.

In another example, the second driver 253 includes a timer. The timer generates events at regular intervals. Even when a processor of the controller 230 is in a sleep mode, the timer operates to generate an event at a predetermined interval. Even when the controller 230 is in a sleep mode, the blinking driver wakes up according to an event generated by the timer to enable blinking at a low power. The blinking period may be set by a manager and may be received by the processor 233 through the communicator 237 during a wake-up period to be transmitted to the second driver 253.

In another example, the pulse generator is activated by the control of the controller 230, and may continue to operate independently of the controller 230 even when the controller 230 is in a sleep mode. Even when the controller 230 is in a sleep mode, the second driver 253 may be supplied with power to continue to operate, so that the promotion function, such as blinking, may be maintained.

A color sheet for colored blinking may be further included on the second display area 213 of the electronic label. Even when the electronic paper display displays information in black and white, the color sheet may blink in colors to improve promotion effects. The color sheet may cover the entire second display area 213, or may cover only a part that is required to be displayed specifically in colors with other areas covered with a transparent sheet.

The first driver and the second driver may be CMOS circuits that are integrated at one edge of the TFT substrate. For example, the CMOS circuit is a type of integrated circuits, and may be included in a digital circuit such as a microprocessor, SRAM, or the like.

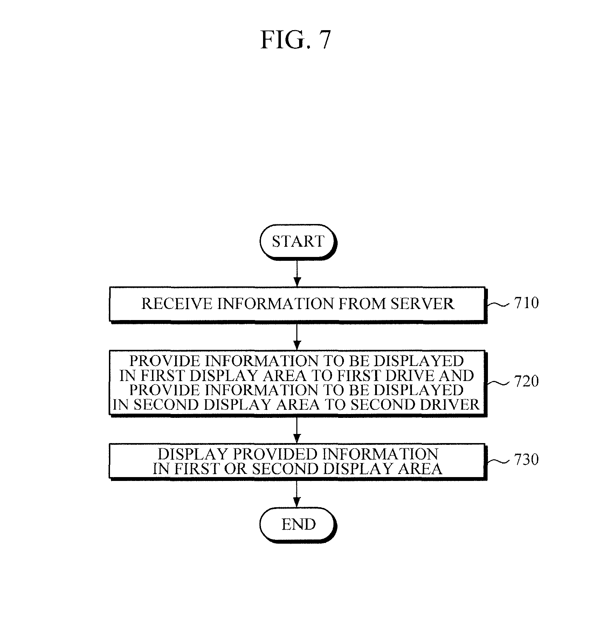

FIG. 7 illustrates an example of a method of displaying information on an electronic label. As examples of electronic labels described with reference to FIGS. 1-6 apply to the electronic label that performs the method illustrated in FIG. 7, a repeated description thereof will be omitted.

Referring to FIG. 7, in 710, a controller of an electronic label receives information that are to be displayed from a server. The information may be received via a gateway.

In 720, the controller of the electronic label provides information to be displayed in a first display area of the electronic label to the first driver from the information received from the server, or provides information to be displayed in a second display area of the electronic label to the second driver from the information received from the server. If the information received from the server includes information that are to be displayed in the first and second display area, the controller may provide the relevant information to both the first and second driver.

In 730, the first driver or the second driver drives a first TFT area associated with the first display area or a second TFT area associated with the second display area, and the information received from the server is displayed on the electronic label.

The first driver and the second driver may drive the first TFT area and the second TFT area such that images displayed on the electronic label is controlled independently from the controller. For example, even if the controller subsequently goes into a sleep mode, the second driver may continually change the image displayed in the second display area.

As described above, the electronic label may display graphic or text promotion information.

Further, the electronic label may display promotion information with low power consumption. As power consumption is reduced, battery life may be extended substantially while providing promotion functions.

In addition, the electronic label may display various types of promotions while having a simple structure and being easy to assemble. According to one example, an area displaying promotion information is separated on a TFT substrate, such that the number of components may be reduced with a simple structure when compared to an existing electronic label with a promotion function.

The apparatuses, units, modules, devices, and other components illustrated in FIGS. 1-6 that perform the operations described herein with respect to FIG. 7 are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIG. 7. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIG. 7 are performed by a processor or a computer as described above executing instructions or software to perform the operations described herein. Examples of a computer include a server, a personal computer, an electronic label, a smart tablet, and a mobile terminal, but are not limited thereto.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. An electronic label for displaying product information received from a server, the electronic label comprising:
an electronic paper display comprising a thin film transistor (TFT) substrate having a first TFT area that corresponds to a first display area and a second TFT area that corresponds to a second display area;
a first driver configured to scan rows and columns of the first TFT area;
a second driver configured to drive the second TFT area; and
a controller configured to interface with the first driver to display the product information on the first display area, and to interface with the second driver to display promotion information on the second display area.

2. The electronic label of claim 1, wherein the second driver is configured to scan rows and columns of the second TFT area.

3. The electronic label of claim 2, wherein the second driver is configured to receive information to be displayed from the controller, and comprises a blinking driver configured to control blinking of the information to be displayed by alternately displaying and not displaying the information.

4. The electronic label of claim 3, wherein the blinking driver is activated the controller, and is configured to continue to operate independently of the controller to enable blinking when the controller is in a sleep mode.

5. The electronic label of claim 4, wherein the second driver further comprises a timer configured to generate an event at a regular interval, and
the blinking driver configured to wake up according to the event generated by the timer.

6. The electronic label of claim 1, wherein the second TFT area comprises a fixed display area having drive lines that are bound together to be driven at the same time.

7. The electronic label of claim 6, wherein the second driver comprises a pulse generator configured to output a switching pulse to bound drive lines in a fixed display area to display information by blinking.

8. The electronic label of claim 7, wherein the pulse generator is activated by the controller, and is configured to continue to operate independently of the controller to enable blinking when the controller is in a sleep mode.

9. The electronic label of claim 8, wherein the second driver further comprises a timer configured to generate an event at a regular interval, and
the blinking driver configured to wake up according to the event generated by the timer.

10. The electronic label of claim 1, wherein the first driver and the second driver are CMOS circuits that are integrated at one edge of the TFT substrate.

11. An electronic label comprising:
an electronic paper display comprising a first display area and a second display area;
a first display driver configured to drive a first thin film transistor (TFT) substrate corresponding to the first display area; and
a second display driver configured to drive a second TFT substrate corresponding to the second display area,
wherein the first display driver is configured to drive the first TFT substrate independently from the second display driver.

12. The electronic label of claim 11, further comprising a controller configured to receive information to be displayed on the electronic paper display from a server, provide first information to be displayed in the first display area to the first display driver, and provide second information to be displayed in the second display area to the second display driver.

13. The electronic label of claim 12, wherein the first display driver or the second display driver is capable of driving the first TFT substrate or the second TFT substrate when the controller is in a sleep mode.

14. A method of displaying product information on an electronic label having a first display area and a second display area, the method comprising:
receiving display data to be displayed on the electronic label from a server;
providing first information to be displayed on the first display area to a first display driver of the electronic label and providing second information to be displayed on the second display area to a second display driver; and
displaying the second information on the second display area independently of the first information displayed in the first display area.

15. The method of claim 14, wherein the providing of the first information and the second information is performed by a controller of the electronic label based on the display data received from the server, and the displaying on the second display area is performed by the second display driver independently of the controller.
